# FASCICULE DE BREVET EUROPEEN

(11) **EP 2 229 083 B1**
(45) Date de publication et mention de la délivrance du brevet: **22.08.2012**
(21) Numéro de dépôt: 08849270.7
(22) Date de dépôt: 14.11.2008
(51) Int. Cl.: A47J 31/40, A47J 31/41, A23L 2/02, A23L 2/56, A23L 2/72, A23L 2/46

(54) **DISPOSITIF DE DISTRIBUTION POUR BOISSON CHAUDE À BASE DE JUS DE FRUITS ET PROCÉDÉ DE PRÉPARATION DE CELLE-CI**
VORRICHTUNG ZUR AUSGABE VON HEISSGETRÄNKEN AUF FRUCHTSAFTBASIS UND ZUBEREITUNGSVERFAHREN DAFÜR
DEVICE FOR DISPENSING A FRUIT JUICE-BASED HOT DRINK AND METHOD FOR PREPARING SAME

(30) Priorité: 14.11.2007 BE 200700554
(43) Date de publication de la demande: 22.09.2010
(73) Titulaire: Indria, Alain, 2600 Berchem (BE)
(72) Inventeur: Indria, Alain, 2600 Berchem (BE)
(74) Mandataire: Petsis, Christos
(86) Numéro de dépôt international: PCT/BE2008/000091
(87) Numéro de publication internationale: WO 2009/062269

(56) Documents cités:
- EP-A- 1 005 795
- EP-A- 1 808 085
- WO-A-01/21292
- WO-A-02/49458
- WO-A-03/013272
- WO-A-2004/014781
- WO-A-2005/048743
- WO-A-2006/058713
- WO-A-2007/068253
- DE-A1- 19 741 801
- US-A1- 2005 095 341
- US-B1- 6 419 120

## Description

### Domaine de l'invention

La présente invention se rapporte à une boisson chaude à base de jus de fruits, et plus particulièrement pour boisson condimentée à base de jus de fruits, ou le cas échéant concentré de fruits ou encore arômes de fruits notamment.

### Etat de la technique

La présente invention se rapporte également aux boissons condimentées en tant que telles. Certes, il existe des boissons de ce type.

Il existe des dispositifs de distribution pour boissons de ce type que sont la machine à cappuccino notamment, qui est munie d'un robinet spécial destiné à produire l'effet si typique de cette préparation tant appréciée du café. Le cappuccino constitue une boisson préparée à partir d'une base de café à laquelle est adjointe une substance lactée mousseuse. L'effet moussant est obtenu par la mise en oeuvre de la machine à cappuccino destinée à cet effet, laquelle est équipée pour introduire dans le lait des microbulles d'air produisant cet effet. Les dispositifs connus fonctionnent avec un petit réfrigérateur, à partir duquel est tiré le lait qui est alors acheminé vers la machine par laquelle s'opère la transformation des deux principaux ingrédients, café chaud et substance lactée, en cappuccino.

Compte tenu de la grande attractivité du résultat moussant obtenu auprès des consommateurs, il eut été tentant d'appliquer cette machine connue à d'autres types de boissons dans la perspective d'obtenir une boisson tout aussi attractive possédant un effet similaire. Cependant, ce développement se heurte à l'utilisation d'un réfrigérateur accessoire qui était utilisé jusqu'à présent par nécessité pour maintenir suffisamment fraîche la substance lactée à adjoindre. D'abord, de tels réfrigérateurs, même réduits, sont encombrants, ce qui peut être gênant. Ce l'est d'autant plus pour un exploitant d'un établissement qui souhaite pouvoir offrir à la fois un expresso à débiter à partir de la machine existante, ét une boisson différente, qui nécessiterait une machine supplémentaire. Or ceci réduirait considérablement l'espace disponible pour l'aubergiste, qui est bien souvent déjà exigu dans les petits établissements.

De plus, l'utilisation d'un tel dispositif de refroidissement séparé de la machine présente l'inconvénient considérable que la substance lactée ne s'y conserve que pendant une durée limitée, généralement quelques jours, voire pas plus de deux à trois après que le carton de lait a été ouvert. Ceci provoque donc inévitablement un gaspillage important de produit, ce qui nuit à la rentabilité.

De surcroît, on ne peut exclure la survenance d'incidents, tels qu'une rupture inopinée de la chaîne du froid. Ceci engendre le risque qu'une boisson impropre à la consommation soit fournie au client. Or, tout risque à cet égard doit être écarté à tout prix et dans toute la mesure du possible.

Quant à la boisson proprement dite, il est connu de DE 197 41 801 A1 une boisson à base de jus de fruits, constitué de jus de pommes, de raisin, de cerises et/ou de groseilles, à l'exclusion toutefois de tout autre fruit, et notamment de jus d'agrumes. Ce document divulgue certes un arôme d'orange et de citron -ce qui n'est clairement pas un jus - avec l'indication supplémentaire que le goût produit par l'adjonction d'un tel arôme d'orange et de citron est très aqueux, ce qui est présenté comme un inconvénient. Ensuite y est défini le but de l'invention selon ce document comme la fourniture d'une boisson épicée à haute valeur sensorielle, c'est-à-dire sàns le composant comprenant l'arôme d'orange et de citron qui ne donne qu'un goût très aqueux selon les enseignements de ce document, ce qui écarte du choix d'un tel ingrédient d'arôme d'orange et de citron, et donc d'agrume.

Ce document indique en outre qu'il ne faut surtout pas prévoir un tel ingrédient d'arôme d'orange et de citron, et donc d'agrume pour la boisson qu'il propose.

On se trouve ainsi détourné des agrumes pour la boisson à confectionner. Or ceci constitue un manque dans la panoplie des saveurs pouvant être mises à profit pour créer de nouvelles saveurs dans le nouveau monde gastronomique où les plus grands cuisiniers se risquent désormais à quitter les sentiers battus en imaginant des combinaisons de saveurs audacieuses jamais proposées auparavant.

### Exposé de l'invention

La présente invention a pour but de pallier aux manques précités. Ainsi, il est proposé suivant la présente invention une boisson produite à partir d'un mélange surprenant d'un jus d'agrumes classique, le cas échéant concentré de fruits, d'une part, et un suc extrait de tissus végétaux, d'autre part. Ainsi, il est proposé suivant la présente invention une boisson telle que définie dans la revendication principale y afférente. A cet égard, la boisson condimentée selon l'invention est composée d'un jus de fruits et d'un condiment, qui est remarquable en ce qu'elle comprend un mélange de jus de fruits et d'au moins un condiment tiré d'une plante utilisée comme condiment.

La boisson suivant la présente invention consiste en un mélange de jus d'agrumes, de préférence du jus d'orange, ou le cas échéant, un succédané à base de concentré, à un suc extrait de racines ou une poudre de racines, voire même un arôme de racine, de préférence du gingembre..

La boisson proposée selon la présente invention est une boisson chaude et moussante, laquelle confère une fraîcheur tonifiante analogue à celle que l'on peut éprouver en buvant un thé classique, mais sans ingestion de théine ou caféine. Grâce à l'invention, une boisson aux arômes surprenants associe la fraîcheur du jus de fruits au goût prononcé du condiment, la combinaison s'avérant être très désaltérante. Le mélange ainsi obtenu est surprenant et remarquable par la sensation de fraîcheur conférée

Ainsi, grâce à l'invention, on obtient une boisson particulièrement appétissante et rafraîchissante, tout en combinant un effet tout à fait surprenant quant au goût à une qualité de premier rang par la nature des ingrédients qui est des plus saines. En effet, la boisson proposée selon l'invention est très vitaminée et en même temps tonique par les condiments y contenus. En outre, elle possède diverses vertus thérapeutiques grâce aux principes actifs présents dans les condiments utilisés, tels que le gingembre, mais aussi d'autres condiments tels que le ginseng et analogues.

De plus cette boisson chaude à base de jus de fruits est constituée essentiellement d'éléments naturels. Cependant, elle peut contenir des colorants et des édulcorants, ce qui s'avère parfaitement adapté pour une exploitation intensive à une échelle industrielle de la boisson.

En bref, il s'agit en l'espèce d'une boisson destinée à remplacer le thé ou le café, à rajouter au créneau des boissons chaudes. Cette boisson présente en outre une similitude d'apparence au cappuccino lorsqu'elle sort de la machine. La comparaison s'arrête là car cette boisson ne contient pas de caféine, et la mousse est fabriquée grâce à de la vapeur d'eau. Grâce à l'invention, on obtient ainsi une boisson remarquablement complexe, en ce sens qu'elle présente plusieurs niveaux de complexité se superposant mutuellement, notamment par sa structure complexe résultant d'une variabilité notable de chaque ingrédient donnant un arôme complexe, le cas échéant doublé d'un parfum complexe.

A titre de variante, le jus de fruits peut être obtenu à base d'autres agrumes, tels que des pamplemousses, des mandarines, clémentines ou autres tangerines. Quant aux sucs de racines, outre les racines de gingembre, des racines de ginseng peuvent également être utilisées ou d'autres catégories de racines et plantes à tubercules, telles que notamment des pommes de terre.

Suivant un mode de réalisation préférentiel de la boisson selon la présente invention, la substance sucrée précitée consiste en un sucre, notamment blanc cristallisé, le cas échéant parfumé notamment à l'une desdites plantes, telle que gingembre, de façon à obtenir un arôme complexe.

La substance sucrée précitée peut consister en un sirop, notamment d'agaves, ou en fructose et/ou dextrose, voire en un succédané de sucre, tel que de l'acesulfame-K, ou aspartame, pour diabétiques notamment. Le mélange précité peut comprendre en outre une addition de β-carotènes, le cas échéant d'autres colorants et/ou une addition d'arômes naturels.

D'autres variantes d'exécution de la boisson selon l'invention sont définies dans les autres sous-revendications.

La présente invention se rapporte encore à un procédé de préparation de boissons condimentées, telles que défini dans les sous-revendications y afférentes. Le procédé de préparation unique offre à cet égard un goût tout aussi unique et totalement surprenant. On mélange d'abord la poudre de gingembre avec de l'eau. On passe ce mélange dans un microfiltre jusqu'à élimination des grandes parties. Puis on ajoute le concentré de jus d'orange, l'édulcorant, le colorant et les arômes. On mélange bien le tout on le pasteurise, et on le conditionne d'une façon aseptique dans des moyens de conditionnement aseptiques.

Le mélange est alors prêt pour être saisi et passé dans la machine pour confectionner la boisson. On pousse sur un bouton pour activer la sortie automatique de boisson. Le mélange peut être sucé par un tuyau relié au vide par ex. où il y a de la vapeur, qui est ajoutée et qui chauffe la préparation pour boisson. Ainsi, un liquide chaud et moussant sort de la machine. Il s'agit d'une caractéristique particulière propre à la boisson proposée, à savoir un liquide chaud et moussant à la sortie du dispositif de distribution de boisson.

Il doit être entendu cependant que dans la boisson ainsi obtenue, l'effet de mousse constitue un mode de réalisation préféré certes, mais non nécessaire puisque, toujours selon l'invention, le mélange de base est composé essentiellement d'un mélange de jus de fruits et d'un suc de plante, principalement de racines de plantes, conférant toute sa spécificité au goût obtenu avec le mélange selon l'invention.

Selon un mode de réalisation avantageux du procédé de l'invention, aucune ionisation n'est appliquée à la boisson, ni en amont, ni en aval de sa préparation.

En outre, cette boisson ainsi obtenue offre l'avantage remarquable d'incorporer en consommation courante un condiment généralement assez confidentiel, tel que le gingembre, qui est habituellement de consommation plutôt restreinte nonobstant ses bienfaits considérables pour la santé. Il en résulte que la boisson proposée est remarquablement tonifiante en incluant les bienfaits précités du gingembre tels que son pouvoir stimulant tant psychique que physique, activant le système immunitaire, et ayant un pouvoir revitalisant. Cette substance est également réputée pour soulager dans une certaine mesure les problèmes digestifs, d'arthrites rhumatoïdes, les migraines, et pour réduire le taux de cholestérol sanguin, ainsi que pour son effet aphrodisiaque. Elle favorise également les expectorations et possède un pouvoir anti-nauséeux.

Le procédé selon l'invention exposé ci-dessus incorpore avantageusement les caractéristiques d'un dispositif de distribution de boissons tel que décrit ci-après. A cet égard, on obtient grâce à la présente invention, une boisson chaude à base de jus de fruits possédant le même effet particulier mais sans l'utilisation d'un réfrigérateur. Cet avantage notable est obtenu grâce à un moyen de conditionnement de type bidon, généralement en carton, tel qu'une poche aseptique, auquel est adjoint un dispositif annexe permettant le mélange de ladite poudre avec de l'eau au moment de la distribution de la boisson. Y sont adjoints un tuyau d'amenée d'eau, un moyen d'aspiration, un moyen de chauffage tous agencés activement dans le dispositif suivant l'invention et un mélangeur permettant de mélanger ladite préparation pour boisson avec le fluide circulant dans ledit tuyau d'amenée. Ledit moyen de conditionnement permet la conservation de ladite préparation pour boisson sur plusieurs jours à température ambiante.

Selon un mode de réalisation particulier de l'invention, ledit dispositif comprend au moins un mode de fonctionnement dans lequel de la vapeur d'eau est présente dans le mélangeur, conférant ainsi un caractère moussant à la boisson chaude à base de jus de fruits distribuée.

Selon un mode de réalisation avantageux de l'invention, ledit moyen de conditionnement aseptique est muni d'un moyen de fermeture étanche, de sorte qu'une partie de ladite préparation pour boisson peut être prélevée du moyen de conditionnement en vue de la distribution d'une boisson, tout en préservant l'asepsie de la préparation pour boisson restante dans le moyen de conditionnement.

Outre l'élimination du réfrigérateur du dispositif de distribution de boisson, un autre avantage consiste en ce que tout gaspillage de préparation pour boisson peut ainsi être évité. En effet, grâce au dispositif selon l'invention, la poche aseptique est raccordée sous vide au dispositif de distribution de boissons chaudes à base de jus de fruits de façon quasi permanente, de sorte que la substance précitée tient beaucoup plus longtemps sans risque de dégradation notable. Cet avantage considérable est obtenu grâce au raccordement étanche à la poche aseptique. Selon un autre mode de réalisation de l'invention, ladite préparation pour boisson se présente sous forme de poudre, dans lequel ledit dispositif comporte une conduite d'amenée d'eau supplémentaire et un moyen de mélange de celle-ci avec ladite poudre, situé en amont dudit mélangeur.

Il est conféré selon l'invention une nouvelle fonction à la machine précitée qui sert à débiter une boisson essentiellement fruitée, c'est-à-dire intrinsèquement de conservation généralement courte, au lieu du café. A ce deuxième usage nouveau de cette machine s'en ajoute un autre par rapport à la réserve d'alimentation de type poche aseptique : en effet, celle-ci est destinée à l'origine à une consommation directe par le consommateur à partir du bidon, contrairement à l'invention où ladite réserve sert d'alimentation au dispositif.

Selon un autre mode de réalisation de l'invention, ledit moyen d'aspiration peut être actionné par un moyen de commande à l'extérieur du dispositif de distribution. Selon un agencement préféré, il s'agit d'une pompe, commandée par un bouton à accès direct pour l'utilisateur pouvant ainsi être agencé utilement à l'avant du dispositif.

Selon un mode de réalisation particulièrement avantageux de l'invention, le dispositif comporte une tuyère calibrée, permettant de prélever ladite préparation pour boisson avec un débit et une vitesse adaptés. En effet, on a pu observer qu'avec une tuyère adaptée, la boisson se fabrique avec une qualité optimale à chaque prélèvement de boisson par le dispositif. La préparation pour boisson arrive au contact de la vapeur d'eau avec un débit et une vitesse qui lui permettent de se mélanger de manière optimale.

Selon un mode de réalisation spécifique de l'invention, le diamètre d'ajutage de ladite tuyère est compris entre 1,2 et 1,4 mm, de préférence sensiblement égal à 1,3 mm, et sa longueur est comprise entre 10 et 15 mm, typiquement sensiblement 12 mm, pour un temps de distribution d'une boisson de 15 à 25 s.

Selon un autre mode de réalisation avantageux de l'invention, le dispositif comporte un moyen de réglage du débit de ladite préparation pour boisson. Ce moyen de réglage peut consister en une molette, ou une vis de serrage du tube flexible : plus la vis est serrée, plus la section de passage est réduite, et donc le débit de préparation pour boisson est réduit.

Selon un mode de réalisation particulièrement avantageux de l'invention, une pompe avec clapet anti-retour, remplit les fonctions de réglage du débit de prélèvement de ladite préparation pour boisson, et de fermeture étanche. Cette disposition permet notamment d'installer deux ou plusieurs préparations pour boissons différentes grâce à deux moyens de conditionnement de préparation pour boisson, permettant le mélange contrôlé de deux préparations pour boissons dans la distribution d'une boisson. Cela peut aussi permettre un fonctionnement alterné avec deux moyens de conditionnement, le deuxième étant utilisé dès que le premier est vide, pendant le temps qu'il faut pour le remplacer. On obtient ainsi un fonctionnement continu sans interruption.

Selon un autre mode de réalisation plus spécifique de l'invention, le moyen de fermeture étanche est une électrovanne.

Selon un autre mode de réalisation particulièrement avantageux de l'invention, lesdits moyens d'aspiration et de chauffage sont appliqués au flux d'eau arrivant par le tuyau d'amenée et dimensionnés de sorte que dans au moins un mode de fonctionnement de la machine, une partie de ladite eau se transforme en vapeur d'eau avant son arrivée dans le moyen d'injection, conférant ainsi un caractère moussant à la boisson distribuée. Typiquement, pour un moyen d'aspiration permettant de distribuer une boisson en 15 à 25 secondes, on installera un chauffage électrique d'une puissance d'au moins 1000 W.

Selon un mode de réalisation préféré de l'invention, le dispositif comprend un réservoir d'eau, muni d'une arrivée d'eau froide avec injection de vapeur, un branchement direct sur ledit dispositif d'un moyen de conditionnement sensiblement étanche, le raccordement étant réalisé par un flexible, en aval duquel est agencé un moyen d'aspiration de liquide qui est mis en liaison avec la réserve d'alimentation précitée par un tuyau d'aspiration à l'intérieur dudit dispositif, ainsi qu'un mélangeur prévu pour injecter de la vapeur d'eau dans le mélange qui permet d'amener une quantité prédéterminée de préparation pour boisson à l'intérieur du dispositif de distribution pour y être mélangée par le mélangeur, avec de la vapeur pour obtenir une substance moussante, et ressortir de la machine dans la forme souhaitée, le moyen d'aspiration étant actionnable par un moyen de commande à l'extérieur du dispositif.

Selon un autre mode de réalisation recommandé de l'invention, ladite poche aseptique étanche est généralement d'une contenance s'élevant à 5 litres environ.

Selon un mode de réalisation de base de l'invention, le dispositif de distribution est mis en oeuvre pour des boissons condimentées à base de jus de fruits.

D'autres particularités de l'invention sont définies dans les autres sous-revendications.

La présente invention est décrite de façon plus détaillée dans les modes de réalisation exemplaires du dispositif de distribution de boissons chaudes à base de jus de fruit exposés ci-après, le dispositif lui-même étant illustré par les dessins annexés.

### Brève description des dessins

La figure 1 représente une vue de face d'un dispositif selon l'invention
La figure 2 est une représentation schématique du dispositif de la figure 1
La figure 3 est une représentation en détail agrandi d'un élément essentiel du dispositif de la figure 1
La figure 4 est une représentation schématique d'une variante du dispositif selon l'invention.

### Description

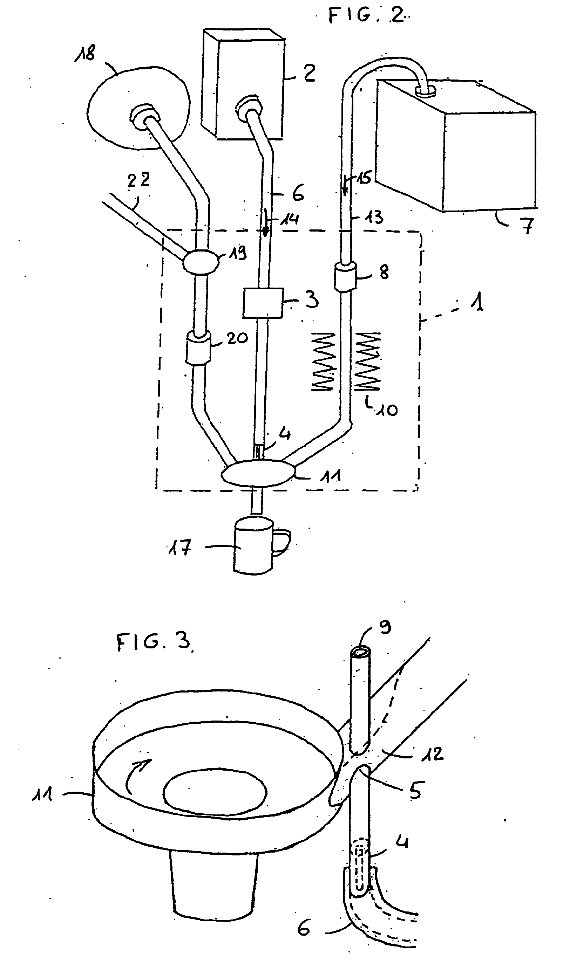

La présente invention se rapporte généralement à un dispositif 1 pour distribuer une boisson mélangée 17 illustré schématiquement dans la figure 2 en ses principaux composants. Le dispositif 1 délivre une boisson 17 possédant un effet particulier visible 16 grâce à un effet de mélange entre une quantité déterminée de préparation pour boisson et de l'eau contenant de la vapeur d'eau. La préparation pour boisson est conservée dans un moyen de conditionnement 2, tel qu'une poche aseptique. Un tuyau 6 relie cette poche à un mélangeur 11, lequel est raccordé également au réservoir d'eau 7 par l'intermédiaire d'un tuyau d'aspiration 13 et d'une pompe 8, typiquement d'une puissance de 16 W. Elle permet d'amener une quantité prédéterminée d'eau vers le mélangeur 11, en étant actionnée par l'utilisateur par un bouton 21 situé à l'extérieur du dispositif 1 et avantageusement à l'avant de celui-ci. Le chauffage 10, typiquement d'une puissance de 1000 W, permet d'en transformer au moins une partie en vapeur d'eau. Le mélangeur remplit alors sa fonction de mélange de l'eau avec vapeur, avec la préparation pour boisson venant de la poche aseptique 2. Ledit mélangeur 11 délivre le mélange obtenu dans la forme souhaitée 17. La poche aseptique 2 est raccordée au mélangeur par un raccordement étanche 3, typiquement une électrovanne, qui permet de prélever de la préparation pour boisson, sans affecter le caractère aseptique de la boisson restante à l'intérieur de la poche aseptique 2.

Le tuyau d'aspiration 13 de l'eau présente un diamètre interne de 3 mm et une longueur d'environ 1 m. La pression d'aspiration confère une certaine vitesse à l'eau 15, transformée partiellement en vapeur, qui arrive au mélangeur 11.

La figure 3 illustre un détail dudit mélangeur 11. Juste avant d'arriver dans le mélangeur 11, l'eau et la vapeur passent par un rétrécissement 12, ce qui crée une augmentation de la vitesse et une dépression dans le mélangeur 11 par effet dit 'venturi', avant de déboucher dans le mélangeur 11 proprement dit. Au droit du rétrécissement 12 se trouve le raccordement 5 du tuyau d'amenée 6 de la préparation pour boisson 14, ainsi qu'une prise d'air extérieur 9. L'extrémité de ce tuyau 6 est donc soumise à ladite dépression par effet venturi, ce qui produit son aspiration. Elle est équipée d'une tuyère 4 permettant d'obtenir le débit et la vitesse adaptés. Cette tuyère 4 comporte un ajutage de diamètre 1,3 mm, sur une longueur de 12 mm. Ces dimensions ont été spécialement choisies pour obtenir des boissons de qualité optimales, compte tenu du dimensionnement du circuit d'aspiration. Celui-ci permet typiquement de distribuer une boisson en 15 à 25 secondes. La tuyère de diamètre 1,3 mm convient également pour le rinçage à l'eau du circuit de préparation pour boisson. Il doit être entendu que pour des performances du circuit d'aspiration différentes, et donc des temps de distribution plus courts, comme par exemple inférieurs à 10 secondes, ou plus longs, comme par exemple supérieurs à 30 secondes, les dimensions de la tuyère 4 devront être adaptées en conséquence.

La commande d'ouverture et de fermeture de l'électrovanne 3 est réalisée en phase avec la commande 21 de mise en marche et arrêt de la pompe 8, de sorte que la préparation pour boisson 14 peut accéder au mélangeur 11 chaque fois que de l'eau y accède, et exerce la force d'aspiration mentionnée ci-dessus, alors que dès que cette force d'aspiration n'est plus présente l'électrovanne 3 se ferme et empêche tout retour d'air ou de fluide vers la poche aseptique 2.

La forme du mélangeur 11 et du rétrécissement 12, ainsi que les dimensions de l'ajutage de la tuyère 4 sont telles que le mélange s'effectue dans les meilleures conditions, et on obtient l'effet particulier moussant 16 dans la boisson 17 ainsi distribuée.

Des essais ont été effectués avec des dimensions d'ajutage de la tuyère différentes, et les résultats suivants ont été obtenus :
- Diamètre 1,2 mm, boisson distribuée à 88°C, très diluée. La préparation pour boisson n'arrive pas à passer à travers l'ajutage de la tuyère;
- Diamètre 1,4 mm, boisson distribuée à 64°C, on constate trop peu de mousse car il y a trop peu de vapeur comparé à la quantité de préparation pour boisson;
- Diamètre 1,3 mm, boisson distribuée à 72°C, de qualité satisfaisante.

La figure 2 montre également un moyen de conditionnement de préparation pour boisson en poudre 18. Dans cette situation, le dispositif est équipé d'une conduite d'amenée d'eau supplémentaire 22 et d'un moyen de mélange 19 de celle-ci avec ladite poudre, situé en amont dudit mélangeur 11.

La figure 2 illustre un dispositif comprenant une poche aseptique 2 pour préparation pour boisson sous forme liquide, avec une conduite 6 équipée d'une électrovanne 3 et d'une tuyère 4, et une poche 18 pour préparation pour boisson en forme de poudre, avec un moyen de mélange 19, et une pompe 20. Cette combinaison de moyens est optionnelle. On peut disposer un ou plusieurs moyens de conditionnement pour liquide 2 et/ou un ou plusieurs moyens de conditionnement pour poudre 18. Dans ce cas de plusieurs moyens de conditionnement, on préfère installer une pompe 20 sur chacun des circuits correspondants, permettant de régler les débits et les vitesses selon les besoins, dans le but de distribuer des boissons avec des mélanges contrôlés de plusieurs préparations pour boissons différentes. Pour le cas des liquides dans une poche aseptique, une telle pompe peut être munie d'un clapet anti-retour, par exemple du type pompe médicale, ce qui permet de remplacer à la fois l'électrovanne 3 et la tuyère 4. Par ailleurs, il doit être entendu que la représentation en sphère ou en parallélépipède pour le moyen de conditionnement 2, 18 est purement illustrative. Les formes des moyens de conditionnement peuvent varier selon les besoins ou les contraintes du moment.

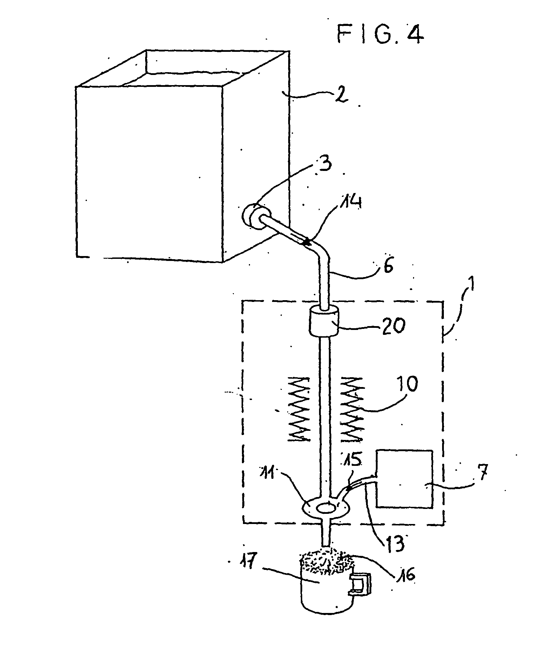

La figure 4 illustre une autre variante d'un dispositif selon l'invention dans laquelle une pompe 20 avec clapet anti-retour, et un chauffage 10 sont installés sur la conduite 6 d'adduction de la préparation pour boisson 14. Un réservoir d'eau 7 muni d'un dispositif pour transformer l'eau en vapeur 15 permet l'injection de vapeur au niveau du mélangeur 11 dans une boisson déjà chaude 14, pour produire l'effet moussant 16 dans la boisson distribuée 17.

La préparation pour boisson 14 est condimentée en étant produite à partir d'un mélange d'un concentré de fruits, ou le cas échéant, arômes de fruits, avec un suc extrait de tissus végétaux. Ainsi, la boisson condimentée est composée d'un jus de fruits et d'un condiment, qui est tiré d'une plante. Cette boisson aux arômes surprenants associant subtilement la fraîcheur du jus de fruits au goût prononcé du condiment, offre une combinaison qui s'avère très désaltérante. Une boisson préférée consiste en un mélange de jus d'agrumes, de préférence du jus d'orange, ou le cas échéant, un succédané à base de concentré, voire même à base d'arômes de fruits, à un suc extrait de racines ou une poudre de racines, voire même un arôme de racine, de préférence du gingembre. Le mélange ainsi obtenu est tout à fait surprenant. In est remarquable par la sensation de fraîcheur conférée, surtout pour une boisson chaude et moussante, qui est de surcroît tonifiante. Au lieu du gingembre, des racines de ginseng ou d'autres racines ou plantes à tubercules peuvent également être utilisées.

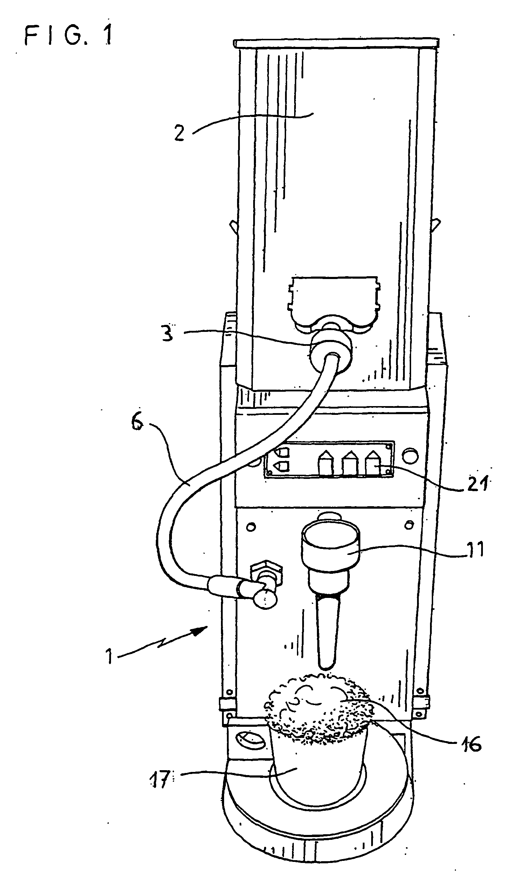

Cette boisson chaude ayant vocation à remplacer le thé ou le café présente en outre une similitude d'apparence au cappuccino lorsqu'elle sort de la machine, tout en ne contenant pas de caféine ou de théine, ni de conservateur, mais en offrant un condensé de vitamines et autres substances bénéfiques ou nutriments. Le procédé de préparation unique offre à cet égard un goût incomparable et totalement surprenant fournissant le mélange prêt pour être saisi et passé dans une machine 1 pour confectionner la boisson. On pousse simplement sur un bouton 21 pour activer la sortie automatique de boisson 17. Le mélange est sucé par un tuyau relié au vide par ex. où il y a de la vapeur, qui est ajoutée et qui chauffe le mélange liquide. Ainsi un liquide chaud et moussant sort de la machine 1 visible sur la figure 1.

A titre illustratif non limitatif, des exemples chiffrés sont cités ci-après indiquant la composition d'un mode préféré de la boisson chaude susdite se répartissant comme suit :
pour ladite boisson: 110 ml de concentré d'orange, 30 g de poudre de gingembre, 0,3 g d'édulcorant, 1,6 ml de colorants et arômes. Puis diluer le tout avec de l'eau jusqu'à 1 l de volume total.

## Revendications

1. Boisson condimentée à base de jus de fruits, consistant en un mélange comprenant au moins un condiment tiré d'une plante, le jus de fruits précité étant à base de concentré, de fruit pur ou d'arôme de fruit, **caractérisée en ce que** le jus de fruits consiste en un jus d'agrumes et **en ce que** le condiment précité consiste en un extrait de racine de plante, lequel condiment consiste en un suc de racine de gingembre ou de ginseng, et **en ce que** le mélange précité comprend en outre de l'eau chaude.

2. Boisson suivant la revendication 1, **caractérisée en ce que** le mélange précité comprend en outre une addition de substance sucrée consistant en un sirop notamment d'agaves, en fructose ou dextrose, ou en un sucre notamment blanc cristallisé, le cas échéant parfumé notamment à l'une desdites plantes de façon à obtenir un arôme complexe.

3. Boisson suivant l'une des revendications 1 ou 2, **caractérisée en ce que** le mélange précité comprend en outre une addition de β-carotènes, le cas échéant d'autres colorants, et/ou une addition d'arômes naturels.

4. Boisson suivant l'une des revendications 1 à 3, **caractérisée en ce qu'**elle consiste en une boisson chaude et moussante constituée d'un mélange de jus d'orange et de gingembre, ainsi que d'eau chaude sucrée.

5. Boisson suivant l'une quelconque des revendications précédentes, **caractérisée en ce qu'**elle possède un arôme complexe, le cas échéant doublé d'un parfum complexe.

6. Procédé de préparation d'une boisson **caractérisé en ce qu'**il comporte les étapes suivantes :
- on sélectionne un condiment à base de poudre de racine de gingembre ou de ginseng
- on mélange ladite poudre avec de l'eau
- on filtre le mélange obtenu dans un microfiltre
- on ajoute un concentré de jus d'agrumes avec éventuellement des édulcorants, des colorants et/ou des arômes
- on pasteurise l'ensemble et on le conditionne d'une façon aseptique dans un moyen de conditionnement aseptique (2, 18)
- on dispose le moyen de conditionnement aseptique (2) précité dans un distributeur de boissons (1) de boissons chaudes à base de jus de fruits, comprenant le moyen de conditionnement (2) précité, un tuyau d'amenée d'eau (13), un moyen d'aspiration (8), un moyen de chauffage (10), un mélangeur (11) permettant de mélanger ladite préparation pour boisson (14) avec le fluide (15) circulant dans ledit tuyau d'amenée (13), ledit moyen de conditionnement (2) permettant la conservation de ladite préparation pour boisson (14) sur plusieurs jours à température ambiante, le moyen de conditionnement aseptique (2, 18) étant une poche aseptique de haute contenance, notamment d'au moins 5 litres, aucune ionisation n'étant appliquée à la boisson, ni en amont, ni en aval de sa préparation.

7. Procédé de distribution (1) de boisson telle que définie suivant l'une quelconque des revendications 1 à 5, en particulier préparée selon la revendication précédente, **caractérisé en ce qu'**il comprend une étape de conditionnement (2) d'une préparation pour boisson, une étape d'amenée d'eau par tuyau (13), une étape d'aspiration (8), une étape de chauffage (10), ladite préparation pour boisson (14) étant mélangée avec le fluide (15) circulant dans ledit tuyau d'amenée (13) par un mélangeur (11), ladite préparation pour boisson (14) étant conservée sur plusieurs jours à température ambiante par ledit moyen de conditionnement (2), le cas échéant **en ce qu'**il comprend au moins une étape dans laquelle de la vapeur d'eau est présentée dans le mélangeur (11), de façon à produire ainsi un caractère moussant à la boisson distribuée.

8. Procédé selon l'une des revendications 6 ou 7, **caractérisé en ce que** ledit moyen de conditionnement (2) est rendu aseptique, et **en ce qu'**il est fermé par un moyen de fermeture étanche (3), de sorte qu'une partie de ladite préparation pour boisson (14) est prélevée du moyen de conditionnement (2) à travers un tuyau d'adduction (6), une boisson (17) étant ainsi distribuée tout en préservant l'aseptisation de la préparation pour boisson restante dans le moyen de conditionnement (2), le cas échéant **en ce que** de l'eau est acheminée par une conduite d'amenée supplémentaire (22) et **en ce que** celle-ci est mélangée avec ladite poudre par un moyen supplémentaire de mélange (19), situé en amont dudit mélangeur (11), en cas de préparation d'une boisson sous forme de poudre.

9. Procédé selon l'une des revendications 6 à 8, **caractérisé en ce que** le moyen d'aspiration (8) est actionné par un moyen de commande (21) à l'extérieur du distributeur (1), l'aspiration (8) étant effectuée par une pompe.

10. Procédé selon l'une des revendications 6 à 9, **caractérisé en ce que** ladite préparation pour boisson (14) est prélevée par une tuyère calibrée (4) disposée en aval du moyen de conditionnement (2) et en amont du mélangeur (11), avec un débit et une vitesse adaptées en vue d'obtenir une boisson de qualité optimale.

11. Procédé de préparation suivant la revendication précédente, **caractérisé en ce qu'**on règle le débit de prélèvement de ladite préparation pour boisson (14) par un moyen de réglage, le réglage du débit de prélèvement de ladite préparation pour boisson (14) et la fermeture étanche étant assurés par une pompe (20) avec clapet anti-retour.

12. Procédé selon l'une des revendications 6 à 11, **caractérisé en ce que** ledit moyen de conditionnement (2) est fermé étanche (3) par une électrovanne.

13. Procédé selon l'une des revendications 7 à 12, **caractérisé en ce que** lesdits moyens d'aspiration (8) et de chauffage (10) sont appliqués au flux d'eau (15) arrivant par le tuyau d'amenée (13) et dimensionnés de sorte que dans au moins un mode de fonctionnement dudit distributeur (1), une partie de ladite eau se transforme en vapeur d'eau avant son arrivée dans le mélangeur (11), conférant ainsi un caractère moussant (16) à la boisson distribuée (17).

14. Procédé selon l'une des revendications 7 à 13, **caractérisé en ce que** de l'eau froide (13) est fournie par un réservoir d'eau (7), par une arrivée d'eau froide (13) avec injection de vapeur (15), qui est branchée directement (6) sur ledit distributeur (1) d'un moyen de conditionnement (2) sensiblement étanche, le raccordement étant réalisé par un flexible, en aval duquel est agencé un moyen d'aspiration (20) de liquide qui est mis en liaison avec la réserve d'alimentation précitée (2) par un tuyau d'aspiration à l'intérieur dudit distributeur (1), ainsi qu'un mélangeur (11) injectant de la vapeur d'eau (15) dans le mélange (14) en amenant une quantité prédéterminée de préparation pour boisson (14) à l'intérieur du distributeur (1) pour y être mélangée par le mélangeur (11), avec de la vapeur (15) pour obtenir une substance moussante (16), en ressortant du distributeur dans la forme souhaitée (16), le moyen d'aspiration (20) étant actionné par un moyen de commande (21) à l'extérieur du distributeur (1).

## Claims

1. Fruit juice based condimented drink, consisting of a mixture comprising at least one condiment from a plant, wherein said fruit juice is based on concentrate, pure fruit or fruit flavor, **characterized in that** the fruit juice consists of a citrus juice and **in that** said condiment consists of an extract of plant root, wherein condiment consists of a root juice of ginger or ginseng, and **in that** said mixture further comprises hot water.

2. Beverage according to claim 1, **characterized in that** said mixture further comprises an addition of sweet substance consisting of syrup notably of agaves, of fructose or dextrose, or of a sugar notably granulated white, possibly perfumed notably with one of said plants so as to obtain a complex aroma.

3. Beverage according to one of claims 1 or 2, **characterized in that** said mixture further comprises an addition of β-carotene, possibly of other dyes, and/or an addition of natural flavorings.

4. Beverage according to one of claims 1 to 3, **characterized in that** it consists of a hot and foaming beverage consisting of a mixture of orange juice, ginger, and sweet hot water.

5. Beverage according to any one of the preceding claims, **characterized in that** it has a complex aroma, possibly coupled with a perfume complex.

6. Method of preparing a beverage **characterized in that** it comprises the following steps:
- selecting a condiment made from powder of ginger or ginseng root
- mixing said powder with water
- filtering the mixture obtained in a micro filter
- adding a concentrated citrus juice optionally with sweeteners, colorants and/or flavorings
- pasteurizing the whole and packaging same aseptically in an aseptic packaging means (2, 18),
- arranging said aseptic packaging means (2) in a beverage dispenser (1) of fruit juice based hot drinks, including said conditioning means (2), a water supply duct (13), a suction means (8), a heating means (10), a mixer (11) for mixing said beverage preparation (14) with the fluid (15) flowing in said supply duct (13), said conditioning means (2) allowing the conservation of said drink mix (14) over several days at room temperature, wherein the aseptic packaging means (2, 18) is an aseptic bag of high capacity, especially at least 5 liters, wherein no ionization is applied to the beverage, neither upstream nor downstream of its preparation.

7. A method for dispensing (1) beverage as defined according to any one of claims 1 to 5, in particular prepared according to the preceding claim, **characterized in that** it comprises a conditioning step (2) of a drink mix, a step of water duct (13) supplying, a suction step (8), a heating step (10), wherein said drink mix (14) is mixed with the fluid (15) flowing in said supply duck (13) by a mixer (11), wherein said drink mix (14) is preserved several days at room temperature by said conditioning means (2), possibly wherein it comprises at least one step in which water vapor is introduced into the mixer (11), so as to generate a foaming nature to the dispensed beverage.

8. Method according to one of claims 6 or 7, **characterized in that** said conditioning means (2) is made aseptic, and **in that** it is closed by a sealing means (3), so that a portion of said drink mix (14) is taken from the conditioning means (2) through an intake pipe (6), wherein a drink (17) is thus opened, while maintaining the sterilization of the remaining drink mix in the conditioning means (2), possibly **in that** water is fed by an additional supply duct (22) and **in that** it is mixed with said powder by an additional mixing means (19), located upstream of said mixer (11), in the case of preparation of a beverage as a powder.

9. Method according to one of claims 6 to 8, **characterized in that** the suction means (8) is actuated by a control means (21) outside the dispenser (1), wherein the suction (8) is carried out by a pump.

10. Method according to one of claims 6 to 9, **characterized in that** said drink mix (14) is charged by a calibrated nozzle (4) arranged downstream of the conditioning means (2) and upstream of the mixer (11), with a flow and a speed adapted so as to obtain a drink of optimum quality.

11. Method according to the preceding claim, **characterized in that** the flow of said drink mix (14) is set by adjusting means, wherein the adjustment of the sample flow of said drink mix (14) and the closure sealing are being provided by a pump (20) with non-return valve.

12. Method according to one of the claims 6 to 11, **characterized in that** said conditioning means (2) is closed tight (3) by a solenoid valve.

13. Method according to one of the claims 7 to 12, **characterized in that** said suction (8) and heating means (10) are applied to the water stream (15) arriving via the supply duct (13), and dimensioned so that in at least one operation mode of said dispenser (1), a portion of said water is transformed into water vapor before it enters the mixer (11), thereby providing a foaming nature (16) to the beverage dispensed (17).

14. Method according to one of the claims 7 to 13, **characterized in that** cold water (13) is supplied from a water tank (7) by a cold water inlet (13) with steam injection (15), which is connected directly (6) on said dispenser (1) a conditioning means (2) that is substantially sealed, wherein the connection is achieved by a flexible, downstream of which is arranged a liquid suction means (20), which is connected to the aforementioned power reserve (2) by a suction pipe within said dispenser (1), and a mixer (11) injecting steam (15) in the mixture (14) causing a predetermined amount of drink mix (14) inside the dispenser (1) to be mixed with steam (15) by the mixer (11), so as to obtain a foaming substance (16), emerging from the dispenser with the desired shape (16), wherein the suction means (20) is actuated by a control means (21) outside the dispenser (1).

## Patentansprüche

1. Gewürztes Getränk auf Fruchtsaftbasis, bestehend aus einer zumindest ein pflanzliches Gewürz enthaltenden Mischung, wobei der genannte Fruchtsaft auf Konzentrat-, Direktsaft- oder Fruchtaromabasis besteht, **dadurch gekennzeichnet, dass** der Fruchtsaft aus einem Zitrusfruchtsaft besteht und dadurch, dass das vorhergenannte Gewürz aus einem pflanzlichen Wurzelextrakt besteht, welches Gewürz aus einem Ingwer- oder Ginsengwurzelsaft besteht, und dadurch, dass die vorhergenannte Mischung außerdem warmes Wasser enthält.

2. Getränk gemäß Anspruch 1, **dadurch gekennzeichnet, dass** die vorhergenannte Mischung außerdem die Beimengung einer süßen Substanz aufweist, welche aus einem Sirup, insbesondere einem Agavensirup, aus Fruktose oder Dextrose, oder aus einem Zucker, insbesondere einem weißen Kristallzucker, besteht, der gegebenenfalls mit einer der vorhergenannten Pflanzen aromatisiert ist, so dass ein komplexes Aroma erhalten wird.

3. Getränk gemäß einem der Ansprüche 1 oder 2, **dadurch gekennzeichnet, dass** die vorhergenannte Mischung außerdem die Beimengung von β-Karotin, gegebenenfalls von anderen Färbemittel, und / oder die Beimengung von natürlichen Aromen enthält.

4. Getränk gemäß einem der Ansprüche 1 bis 3, **dadurch gekennzeichnet, dass** es aus einem warmen und schaumigen Getränk besteht, das aus einer Mischung aus Orangensaft und Ingwer, sowie aus warmem, süßem Wasser besteht.

5. Getränk gemäß einem der vorherigen Ansprüche, **dadurch gekennzeichnet, dass** es ein komplexes Aroma, gegebenenfalls kombiniert mit einem komplexen Parfüm, aufweist.

6. Verfahren zur Zubereitung eines Getränks, **dadurch gekennzeichnet dass** es folgende Schritte aufweist;
- Man wählt ein Gewürz aus Ingwer- oder Ginssengwurzelpulverbasis;
- Man mischt das genannte Pulver mit Wasser;
- Man filtriert die erhaltene Mischung mit einem Mikrofilter;
- Man fügt ein Zitrusfruchtsaftskonzentrat gegebenenfalls mit Süßmittel, Färbemittel und / oder Aromen bei,
- Man pasteurisiert die Gesamtheit und bereitet sie aseptisch in einem aseptischen Aufbereitungsmittel (2, 18) auf;
- Man ordnet das vorhergenannte, aseptische Aufbereitungsmittel (2) in einem Getränkeverteiler (1) für heiße Getränke auf Fruchtsaftsbasis an, welcher das vorhergenannte Aufbereitungsmittel (2), eine Wasserzuführungsleitung (13), ein Ansaugmittel (8), ein Erwärmungsmittel (10), einen Mischer (11), mit welchem die genannte Getränkezubereitung (14) mit dem Fluid gemischt wird (15), das in die genannte Wasserzuführungsleitung (13) fließt, enthält,
wobei das genannte Aufbereitungsmittel (2) die Aufbewahrung der genannten Getränkezubereitung (14) über mehrere Tage bei Raumtemperatur ermöglicht, wobei das aseptische Aufbereitungsmittel (2, 18) eine aseptische Tasche mit großem Fassungsvermögen, insbesondere von mindestens 5 Liter, ist und wobei das Getränk keiner Ionisation unterworfen wird, weder vor noch nach seiner Zubereitung.

7. Verfahren zur Verteilung eines Getränks wie in einem der Ansprüche 1 bis 5 definiert, insbesondere gemäß vorherigem Anspruch zubereitet, **dadurch gekennzeichnet, dass** es einen Aufbereitungsschritt (2) einer Getränkezubereitung, einen Wasserzuftihrungsschritt mit einer Zuleitung (13), einen Ansaugschritt (8), einen Erwärmungsschritt (10), wobei die genannte Getränkezubereitung (14) und das Fluid (15), das in die genannte Zuführungsleitung (13) fließt, mittels des Mischers (11) gemischt werden, aufweist, wobei das genannte Getränk (14) über mehrere Tage bei Raumtemperatur durch das genannte Aulbereitungsmittel (2) haltbar ist, gegebenenfalls dadurch, dass es zumindest einen Schritt aufweist, bei welchem Wasserdampf in den Mischer (11) zugeführt wird, so dass das verteilte Getränk einen schaumigen Charakter erhält.

8. Verfahren gemäß einem der Ansprüche 6 oder 7, **dadurch gekennzeichnet, dass** das genannte Aufbereitungsmittel (2) aseptisch gemacht wird, und dadurch, dass es mit einem dichten Verschluss (3) geschlossen wird, so dass ein Teil der genannten Getränkezubereitung (14) aus dem Aufbereitungsmittel (2) via einer Leitung (6) entnommen wird, wobei ein Getränk (17) verteilt wird, während die Keimfreiheit der in dem Aufbereitungsmittel (2) verbleibenden Getränkezubereitung erhalten bleibt, gegebenenfalls dadurch, dass das Wasser durch eine zusätzliche Zuführungsleitung (22) geleitet wird und dadurch, dass dieses mit dem genannten Pulver mittels eines zusätzlichen Mischmittels (19) gemischt wird, welches sich, im Fall der Vorbereitung eines Getränks in Pulverform, vor dem genannten Mischer (11) befindet.

9. Verfahren gemäß einem der Ansprüche 6 bis 8, **dadurch gekennzeichnet, dass** das Ansaugmittel (8) mittels eines Bedienungsmittels (21) außerhalb des Verteilers (1) betätigt wird, wobei das Ansaugen (8) mittels einer Pumpe realisiert wird.

10. Verfahren gemäß einem der Ansprüche 6 bis 9, **dadurch gekennzeichnet, dass** die genannte Getränkezubereitung (14) via einer kalibrierten Düse (4) entnommen wird, die sich vor dem Aulbereitungsmittel (2) und nach dem Mischer (11) befindet, wobei der Durchfluss und die Geschwindigkeit derart angepasst sind, dass ein Getränk optimaler Qualität erhalten wird.

11. Verfahren zur Vorbereitung gemäß vorhergehendem Anspruch, **dadurch gekennzeichnet, dass** der Durchfluss der Entnahme der genannten Getränkezubereitung (14) durch ein Einstellungsmittel eingestellt wird, wobei die Einstellung des Durchflusses der Entnahme der genannten Getränkezubereitung (14) und der dichte Verschluss durch eine Pumpe (20) mit einem Rückschlagventil realisiert sind.

12. Verfahren gemäß einem der Ansprüche 6 bis 11, **dadurch gekennzeichnet, dass** das genannte Aufbereitungsmittel (2) mittels eines Elektroventils dicht verschlossen ist (3).

13. Verfahren gemäß einem der Ansprüche 7 bis 12, **dadurch gekennzeichnet, dass** die genannten Ansaug- (8) und Erwärmungsmittel (10) auf den durch die Zuführungsleitung (13) zugeführten Wasserfluss (15) angewendet werden und derart dimensioniert sind, dass in zumindest einem Betriebsmodus des genannten Verteilers (1) ein Teil des genannten Wassers sich vor seiner Ankunft in der genannten Mischung (11) in Wasserdampf verwandelt, so dass das verteilte Getränk (17) einen schaumigen Charakter (16) erhält.

14. Verfahren gemäß einem der Ansprüche 7 bis 13, **dadurch gekennzeichnet, dass** kaltes Wasser (13) aus einem Wasserbehälter (7) durch eine Kaltwasserleitung (13) mit Wasserdampfeinspritzung (15) bereitgestellt wird, welche unmittelbar (6) mit dem Verteilter (1) eines Aufbereitungsmittels (2) dicht verbunden ist, wobei die Verbindung durch einen Schlauch, nach welchem ein Flüssigkeitsansaugmittel (20) geschaltet ist, das mit der vorhergenannten Versorgungskammer (2) durch einen Ansaugschlauch im Inneren des genannten Verteilers (1) verbunden ist, sowie einen Mischer (11), welcher Wasserdampf (15) in die Mischung (14) einspritzt, gebildet ist, und dadurch, dass eine vorher festgelegte Menge einer Getränkezubereitung (14) ins Innere des Verteilers (1) geleitet wird, um dort vom Mischer (11) mit Wasserdampf (15) vermischt zu werden, so dass eine schaumige Struktur beim Verlassen des Verteilers in der gewünschten Form (16) erhalten wird, wobei das Ansaugmittel (20) via einem Bedienungsmittel (21) außerhalb des Verteilers (1) betätigt wird.
